# EUROPEAN PATENT APPLICATION

(11) **EP 3 299 191 A1**
(43) Date of publication of application: **28.03.2018**
(21) Application number: 17191874.1
(22) Date of filing: 19.09.2017
(51) Int. Cl.: B60D 1/06, B60D 1/36, B60D 1/62

(54) **TRAILER HITCH BALL DETECTION AND LOCATION MEASUREMENT USING A REAR VIEW CAMERA**

(30) Priority: 22.09.2016 US 201615273283
(71) Applicant: Robert Bosch GmbH, 70442 Stuttgart (DE)
(72) Inventor: Miller, James Stephen, Dexter, MI Michigan 48130 (US); Gehrke, Mark, Ypsilanti, MI Michigan 48197 (US)

(57) **Abstract**

A method and system for determining a position of a hitch ball on a vehicle. The system performs a method that includes generating an image that includes the hitch ball with a video camera. An electronic processor that includes an electronic processor and a memory receives the image and analyzes the image to determine a distance between the hitch ball and the video camera. The electronic processor analyzes the image to determine a height of the hitch ball based on the distance between the hitch ball and the video camera.

## Description

### BACKGROUND

Embodiments relate to a trailer coupling assistance system including a video camera for guiding a vehicle to a coupling position with a trailer.

### SUMMARY

One embodiment provides a method of determining a position of a trailer hitch ball on a vehicle. The method includes generating an image that includes the trailer hitch ball with a video camera. An electronic processor receives the image and analyzes the image to determine a distance between the trailer hitch ball and the video camera. The electronic processor analyzes the image to determine a height of the trailer hitch ball based on the distance between the trailer hitch ball and the video camera.

Another embodiment provides a system for determining a position of a trailer hitch ball on a vehicle. The system includes a video camera positioned on a rear of the vehicle and an electronic processor. The electronic processor is configured to receive an image that includes the trailer hitch ball from the video camera. The electronic processor analyzes the image to determine a distance between the trailer hitch ball and the video camera and analyzes the image to determine a height of the trailer hitch ball based on the distance between the trailer hitch ball and the video camera.

Yet another embodiment provides a method of determining a position of a trailer hitch ball on a vehicle. The method includes generating an image that includes the trailer hitch ball with a video camera. An electronic processor receives the image and determines the distance between the trailer hitch ball and the video camera. In determining the distance, the electronic processor identifies an object in the image that is representative of the trailer hitch ball, identifies a location of the object within the image, and identifies an angle associated with the location of the object. The angle is defined as between an optical axis of the video camera and a line of sight to the trailer hitch ball. The method also includes positioning the video camera at a rear of the vehicle with a lateral offset from a centerline of the vehicle. The electronic processor determines a distance value of the lateral offset and determines the distance between the trailer hitch ball and the video camera based on a trigonometric relation between the angle and the distance value of the lateral offset.

Yet another embodiment provides a method of determining a position of a trailer hitch ball on a vehicle. The method includes generating an image that includes the trailer hitch ball with a video camera. An electronic processor that includes an electronic processor and a memory receives the image and determines the distance between the trailer hitch ball and the video camera. In determining the distance, the electronic processor identifies an object in the image that is representative of the trailer hitch ball, identifies a location of the object within the image, and identifies an angle associated with the location of the object. The angle is defined as between an optical axis of the video camera and a line of sight to the trailer hitch ball. The method includes entering a size value of a hitch ball of the trailer hitch ball into the electronic processor. The size of the object in the image is determined by the electronic processor. The electronic processor compares the size of the object in the image to the size value and determines the distance between the trailer hitch ball and the video camera based on a relationship between the distance and the size of the object in the image.

Other aspects, features, and embodiments will become apparent by consideration of the detailed description and accompanying drawings.

### BRIEF DESCRIPTION OF THE DRAWINGS

Fig. 1 is a block diagram of a vehicle with a trailer hitch system according to one embodiment.
Fig. 2 is a side view of the vehicle of Fig. 1 and a trailer that are not coupled together.
Fig. 3 is a top-down view of a rear portion of the vehicle of Fig. 1.
Fig. 4 is a flowchart of a method of determining a height of a trailer hitch ball of the trailer hitch system of Fig. 1 according to one embodiment.
Fig. 5 is a flowchart of a method of determining a height of a trailer hitch ball of the trailer hitch system of Fig. 1 according to another embodiment.

### DETAILED DESCRIPTION

Before any embodiments are explained in detail, it is to be understood that the invention is not limited in its application to the details of construction and the arrangement of components set forth in the following description or illustrated in the following drawings. The invention is capable of other embodiments and of being practiced or of being carried out in various ways

A plurality of hardware and software based devices, as well as a plurality of different structural components may be used to implement various embodiments. In addition, embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects of the invention may be implemented in software (for example, stored on non-transitory computer-readable medium) executable by one or more processors. For example, "control units" and "controllers" described in the specification can include one or more processors, one or more memory modules including non-transitory computer-readable medium, one or more input/output interfaces, one or more application specific integrated circuits (ASICs), and various connections (for example, a system bus) connecting the various components.

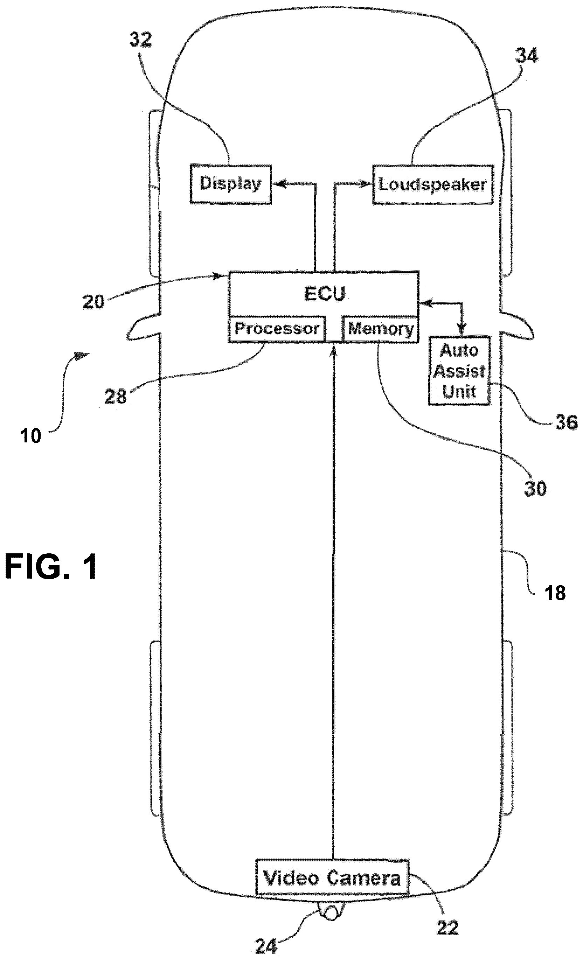

A vehicle 18 equipped with a trailer hitch system 10 is illustrated in Fig. 1. In the example illustrated, the trailer hitch system 10 includes an electronic control unit (ECU) 20 that receives video images from a video camera 22 mounted at a rear end of the vehicle 18. The video camera 22 may include an image sensor for generating video images as a succession of image frames. In some embodiments, the video camera 22 is a single monocular video camera and/or a panoramic lens camera. For example, the video camera 22 may be equipped with a wide-angle or "fish-eye" lens to generate an approximately 180 degree view of an area behind the vehicle 18. The video camera 22 is disposed near a trailer hitch 24. The trailer hitch 24 typically includes a ball-type connector, herein referred to as a hitch ball, but other types of connectors are contemplated.

The ECU 20 includes a plurality of electrical and electronic components that provide power, operation control, and protection to the components and modules within the ECU 20. The ECU 20 includes, among other things, an electronic processor 28 (such as a programmable electronic microprocessor, microcontroller, or similar device), a memory 30 (for example, non-transitory, machine readable memory), and an input/output interface (not illustrated). In other embodiments, the ECU 20 includes additional, fewer, or different components. The ECU 20 may be implemented in several independent controllers or modules each configured to perform specific functions or portions of the methods described below.

The ECU 20 is configured to implement, among other things, processes and methods described herein. For example, the electronic processor 28 is communicatively coupled to the memory 30 and executes instructions stored on the memory 30. The electronic processor 28 is configured to retrieve from memory 30 and execute instructions related to operation of the trailer hitch system 10. In some embodiments, the input/output interface includes drivers, relays, switches, and the like, which in conjunction with other vehicle systems, automatically operate the vehicle 18 or assist a driver with operating the vehicle 18 based on instructions from the electronic processor 28. In some embodiments, the input/output interface communicates with other vehicle controllers or systems by means of a protocol such as J1939 or CAN bus. In some embodiments, the input/output interface communicates via a wired or wireless connection and suitable protocols depending on the needs of the specific application.

In the embodiment illustrated in Fig. 1, the ECU 20 connects to a vehicle display 32 that may be an LCD monitor or other type of visual display. In the illustrated embodiment, the vehicle display 32 includes a touchscreen configured to allow an operator to select items or icons shown on the vehicle display 32. The ECU 20 also connects to a loudspeaker 34 and to an auto assist unit 36. The vehicle display 32 and loudspeaker 34 may be connected directly and controlled by the ECU 20. In another embodiment, the vehicle display 32 and the loudspeaker 34 are controlled by another ECU (not shown) that communicates with the ECU 20. In some embodiments, the vehicle display 32 is disposed in a vehicle console and the loudspeaker 34 correspond to the entertainment loudspeakers. The ECU 20 may override normal outputs from the entertainment loudspeakers when a warning is required from the loudspeaker 34.

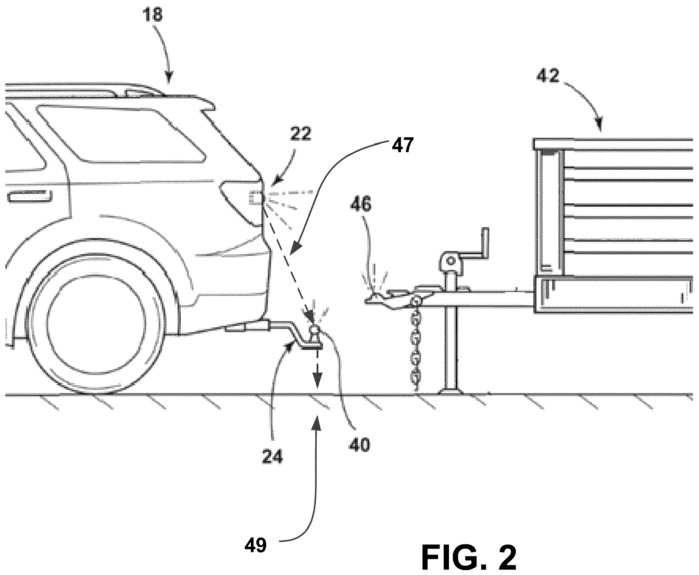

Fig. 2 shows an arrangement with the vehicle 18 having the video camera 22 mounted at an upper rear end of the vehicle 18 and the trailer hitch 24 including a hitch ball 40. A trailer 42 including a trailer coupler 46 is also illustrated. In one embodiment, the trailer coupler 46 has a receiving aperture oriented downwardly and an adjustable tongue element for partially enclosing the hitch ball 40 therein. While the hitch ball 40 is shown, other types of connecting mechanisms and hitch connectors are contemplated. The invention is adaptable to fifth wheel arrangements, tractor trailer arrangements, and various other types of trailers. An arrow 47 is indicative of a distance between the video camera 22 and the hitch ball 40. This distance is used to determine a height of the hitch ball 40 as indicated by the arrow 49.

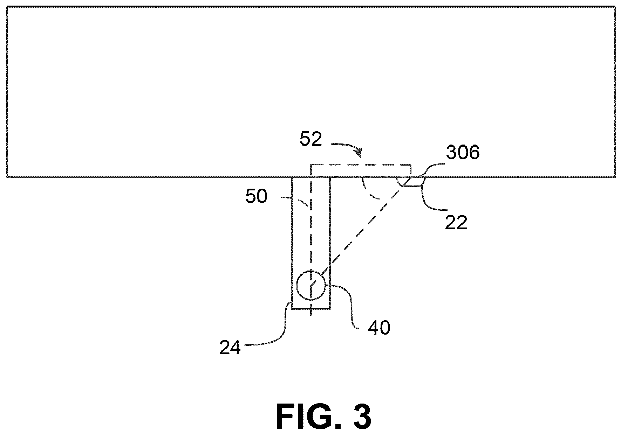

Fig. 3 is a top-down view of a rear portion of the vehicle 18 and the trailer hitch 24 according to one embodiment. As in the example illustrated, the trailer hitch 24 is typically mounted in-line with a centerline 50 of the vehicle 18. In this example, the video camera 22 is laterally offset from the centerline 50 of the vehicle 18 and the trailer hitch 24. A position of the video camera 22 and a distance value 52 of the lateral offset may be predetermined during manufacture of the vehicle. For example, the video camera 22 or a mount for the video camera 22 is orientated in a specified position relative to the centerline 50 of the vehicle. As a consequence, the distance value 52 between the video camera 22 and the centerline 50 is known based on the particular configuration of the vehicle 18. The distance value 52 may be programmed and stored in the ECU 20 as a parameter used in calculating a position of the hitch ball 40 as described below. In some embodiments, the ECU 20 may be programmed with a new or updated distance value upon calibration of the video camera 22 after manufacture.

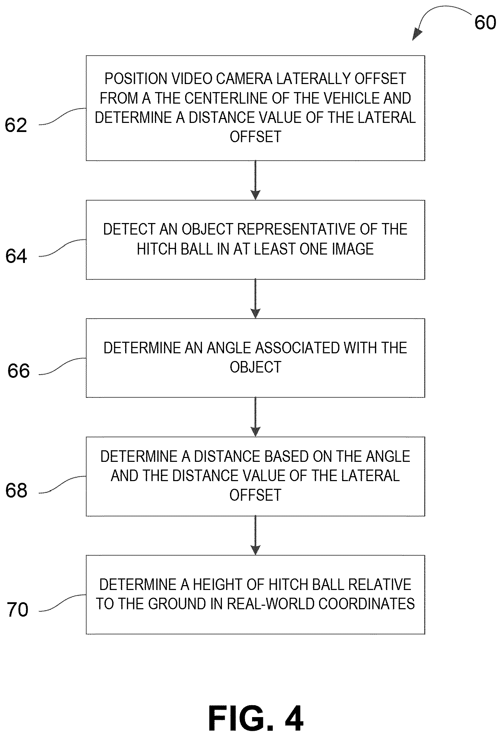

Fig. 4 is a flowchart of a method 60 for operating the trailer hitch system 10 according to a first embodiment. Prior to performance of the method 60, an initial setup of the trailer hitch system 10 is performed. During setup, the intrinsic and extrinsic properties of the video camera 22 are determined. This includes calibrating the video camera 22 so that each pixel of any given image frame may be associated with a particular line-of-sight projecting from the lens of the video camera 22. Due to the calibration, each line-of-sight (and associated pixel) may be associated with a particular angle from an optical centerline of the video camera 22. Based on the angle, the ECU 20 is capable of determining a direction to the object in the real world (for example, with reference to a real-world coordinate system). The first step may be performed once after installation of the video camera 22 or may be performed multiple times at various intervals.

In the method 60, the video camera 22 is positioned with a lateral offset from the centerline 50 of the vehicle 18 as shown in Fig. 3 (block 62). The distance value 52 of the lateral offset is determined and programmed into the ECU 20. During operation, the ECU 20 detects one or more objects within one or more image frames from the video camera 22 (block 64). For example, the ECU 20 may implement a trained classifier to detect the objects. The ECU 20 may identify features in an image frame by size, color, brightness, and the like, and compare the features to a plurality of known objects (for example, one or more styles of hitch balls or trailer hitches) preprogrammed into a library of the memory 30 of the ECU 20. In particular, the ECU 20 is configured to detect, identify, and classify an object representative of the trailer hitch 24 or the hitch ball 40. In some embodiments, the ECU 20 detects and classifies the hitch ball 40 rather than the trailer hitch 24. In these embodiments, the ECU 20 may identify the hitch ball 40 by a circular shape, size, and approximate location in the image frame. In some embodiments, the ECU 20 performs multi-frame resolution enhancement (for example, super resolution) to improve confidence in detection and identification. In some embodiments, the ECU 20 may use an identifier (for example, a patterned sticker) positioned on or near the hitch ball 40 to aid in detection.

Once the object is identified as the trailer hitch 24 or hitch ball 40, the ECU 20 determines one or more angles associated with the object (block 66). For example, the ECU 20 may determine an angle from the centerline of the video camera 22 to the center of the object (for example, to a pixel located at a geometric center of the object). In some embodiments, the ECU 20 determines another distance based on the angle and based on the distance value 52 of the lateral offset that is preprogrammed in the ECU 20 (block 68). The distance may be along the centerline 50 and may describe a shortest distance between the hitch ball 40 and a line vertically aligned with the video camera 22. This distance may be calculated based on a trigonometric relationship between the angle and distance 52. For example, in some embodiments, the ECU 20 determines the distance from the video camera 22 to the hitch ball 40 based on a cosine or a sine function. Since the video camera 22 has a location calibrated to real-world coordinates, the ECU 20 may then determine the position of the hitch ball 40 in real-world coordinates based on the distance determined in block 66 and the angle determined in block 64. The ECU 20 may also determine the height of the hitch ball 40 and/or the trailer hitch 24 from the ground in real-world coordinates (block 70).

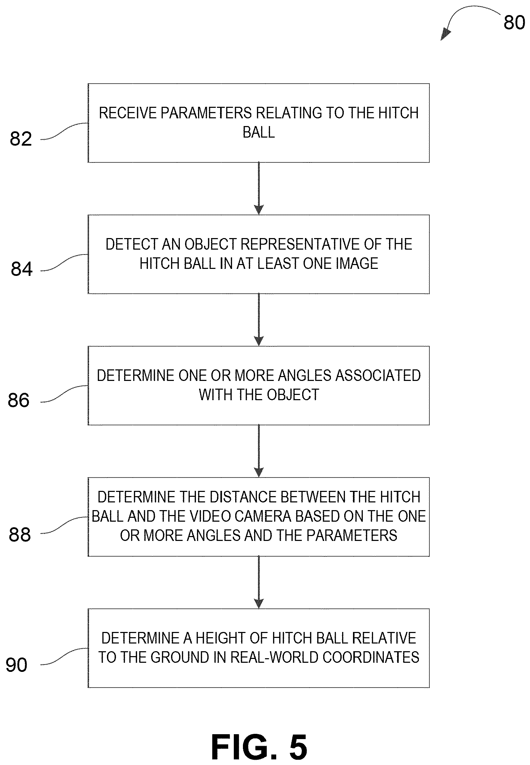

In a second embodiment illustrated in Fig. 5, the ECU 20 performs method 80. In the method 80, the ECU 20 receives one or more parameters relating to the hitch ball 40 (block 72). The parameters may include a size of the hitch ball 40 (for example, a diameter of the hitch ball 40). The ECU 20 may receive the parameters by manual entry into the vehicle display 32 (for example, by the touchscreen) or by another driver-input device. The ECU 20 may convert the diameter of the hitch ball 40 to a reference value such as a number of pixels per distance in the image frames. In some embodiments, the ECU 20 is preprogrammed with common values of ball sizes and performs a feasibility check based on the entered parameters. The ECU 20 stores the parameters for use in the method 80 until the parameters are updated by, for example, a driver input selecting a new size of the hitch ball 40. Once, programmed with the parameters, the ECU 20 detects an object representative of the hitch ball 40 in one or more image frames from the video camera 22. Similar to the method 60, the ECU 20 may perform object detection by various types of image analysis, classification, identifier detection, or some combination of the foregoing. Once the hitch ball 40 is detected, the ECU 20 determines one or more angles associated with the object (block 86). The ECU 20 may determine multiple angles from the optical centerline of the video camera 22 to multiple sides of the detected object. Based on a difference in the angles, the ECU 20 may determine a size of the object. In other embodiments, the ECU 20 determines the size of the object in the image by direct measurement in width of the object in pixels. The ECU 20 then compares the size of the detected object to the parameters defining the preprogrammed size of the hitch ball 40. Based on the comparison, the ECU 20 determines the distance between the video camera 22 and the hitch ball 40. Once the distance is determined, the ECU 20 determines the position (for example, in real-world coordinates) of the hitch ball 40 based on the distance and the one or more angles. The ECU 20 may also determine the height of the hitch ball 40 relative to the ground in real-world coordinates.

Once the position and height of the trailer hitch 24 and/or the hitch ball 40 are determined, the ECU 20 uses these parameters in performance of various maneuvers of the vehicle 18. For example, the ECU 20 may also determine real-world coordinates of the trailer coupler 46. The real-world coordinates of the trailer coupler 46 may be compared to the determined position of the hitch ball 40. The electronic processor 28 may utilize the determined position and height of the hitch ball 40 to determine parameters of the trailer 42, such as a height and position of the trailer coupler 46. The ECU 20 may determine a clearance between the hitch ball 40 and the trailer coupler 46 and determine whether the trailer coupler 46 is positioned higher than the hitch ball 40. If the clearance is below a threshold, the ECU 20 may consider the clearance insufficient to avoid a potential collision. The ECU 20 may provide an adjustment warning via the vehicle display 32 and/or the loudspeaker 34. In some embodiments, the warning is an audio warning, a visual warning, or both. In one embodiment, the warning is an audio message or verbal command. In another embodiment, the warning is indicia provided on the vehicle display 32. If the ECU 20 determines that there is sufficient clearance for the trailer hitch 24 and the hitch ball 40 to move under the trailer coupler 46, the ECU 20 may assist in moving the vehicle 18 to a trailer coupling position.

For example, the ECU 20 uses the determined distance of the trailer hitch 24 or the hitch ball 40 from the trailer coupler 46 and determines a steering angle and path to advance the trailer hitch 24 to the trailer coupling position. The electronic processor 28 provides audio and/or visual signals to the vehicle display 32 and the loudspeaker 34 in the vehicle 18 by tracking the trailer coupler 46 across multiple frames of the video images. The signals inform a vehicle operator how much and in what direction to modify the vehicle steering wheel position to obtain a proper location for advancing to the trailer coupling position. The signals may include visual and/or audio commands indicating proper direction and amount that a steering wheel must be turned. In one embodiment indicia provided on the vehicle display 32 provides direction and amount of steering wheel turning that is required. The ECU 20 analyzes the distance data, etc. to determine whether the vehicle is in the trailer coupling position. If not, the electronic processor 28 provides updated signals to a driver for controlling the steering wheel position and, optionally, the vehicle speed.

After a number of iterations, a program executed by the electronic processor 28 determines that the trailer hitch 24 is in the trailer coupling position with respect to the trailer coupler 46. A vehicle stopping indication is provided. In the trailer coupling position, the hitch ball 40 of the trailer hitch 24 is essentially directly below the trailer coupler 46. Thereafter, an operator may operate a crank to lower a trailer support stand to seat the trailer coupler 46 upon the hitch ball 40. Then a tongue member is moved and secured so that the trailer coupler 46 is locked in a closed and secured position.

In other embodiments, the ECU 20 may automatically analyze and determine a travel path to the trailer coupling position from the trailer hitch 24 and trailer coupler 46 identification, distance, and height parameters. The auto assist unit 36 receives steering control signals and vehicle speed signals from the electronic processor 28 of the ECU 20 and controls the vehicle 18 independently from and without input by the vehicle operator. Thus, autonomous steering, throttle, and braking control may operate the vehicle 18 without action by the driver. The ECU 20 determines whether the trailer hitch 24 is in the trailer coupling position. If not, the ECU 20 repeats the analysis and control of the steering direction and vehicle speed until the trailer coupling position is reached. In some embodiments, after the ECU 20 determines the height of the trailer hitch 24 or the hitch ball 40, the ECU 20 determines whether the trailer hitch 24 has sufficient clearance with the trailer coupler 46. For example, the ECU 20 may determine a height difference between the hitch ball 40 and the trailer coupler 46 and if the height difference is below a threshold, the ECU 20 may terminate autonomous control of the vehicle 18 or issue a warning when there is a lack of sufficient clearance.

In some embodiments, the position of the trailer hitch 24 and the hitch ball 40 is used to determine maneuverability of the vehicle 18 and trailer 42 when coupled. For example, the pivot point of the trailer 42 corresponds to the location of the hitch ball 40 and may be used as an input to various vehicle control systems that require the angle between the vehicle 18 and the trailer 42 (i.e., the vehicle-trailer angle). A known pivot point may be used by computer vision algorithms in measuring the vehicle-trailer angle. Sway mitigation systems use changes in the vehicle-trailer angle to detect and reduce trailer sway that can be induced by wind or road conditions. Trailer backup assist systems use the vehicle-trailer angle to determine the vehicle steering angle required to maneuver the trailer 18 in a specified direction.

The flowcharts in Figs. 4-5 are for purposes of explanation only. Different orders for the steps are contemplated as well as different arrangements. While the above description states that the ECU 20 performs the steps shown in the flowcharts of Figs. 5 and 6, the electronic processor 28 in cooperation with the memory 30 is also considered as performing the steps.

Various features, advantages, and embodiments are set forth in the following claims.

## Claims

1. Method of determining a position of a hitch ball on a vehicle, the method comprising:
generating, with a video camera, an image that includes the hitch ball;
receiving the image at an electronic processor;
analyzing the image with the electronic processor to determine a distance between the hitch ball and the video camera; and
analyzing the image with the electronic processor to determine a height of the hitch ball based on the distance between the hitch ball and the video camera.

2. The method according to claim 1, wherein generating the image with the video camera includes generating a plurality of images with a single wide-angle lens camera positioned at a rear end of the vehicle.

3. The method according to claim 1, wherein analyzing the image with the electronic processor to determine the distance between the hitch ball and the video camera includes
identifying an object in the image that is representative of the hitch ball;
identifying a location of the object within the image; and
identifying an angle associated with the location of the object, the angle being defined as between an optical axis of the video camera and a line of sight to the hitch ball.

4. The method according to claim 3, wherein identifying the object in the image that is representative of the hitch ball includes identifying the object from at least one feature of the object by comparing the feature with a library of features of one or more hitch balls.

5. The method according to claim 3, further comprising:
positioning the video camera at a rear of the vehicle with a lateral offset from a centerline of the vehicle; and
determining a distance value of the lateral offset.

6. The method according to claim 5, wherein analyzing the image with the electronic processor to determine the distance between the hitch ball and the video camera includes determining the distance based on a trigonometric relation between the angle and the distance value of the lateral offset.

7. The method according to claim 3, further comprising entering a size value of the hitch ball into the electronic processor, and wherein identifying the object in the image that is representative of the hitch ball includes determining a size of the object in the image.

8. The method according to claim 7, further comprising comparing the size of the object in the image to the size value, and wherein determining the distance between the hitch ball and the video camera is based on a relationship between the distance and the size of the object in the image.

9. The method according to claim 1, further comprising calibrating the video camera with extrinsic and intrinsic parameters prior to analyzing the image with the electronic processor.

10. The method according to claim 1, further comprising at least one selected from the group consisting of:
terminating autonomous control of the vehicle when the electronic processor determines that the height of the hitch ball does not have sufficient clearance with a trailer connector; and
issuing a warning when the electronic processor determines that the height of the hitch ball does not have sufficient clearance with a trailer connector.

11. A system for determining a position of a hitch ball on a vehicle, the system comprising:
a video camera positioned on a rear of the vehicle; and
an electronic processor configured to
receive an image that includes the hitch ball from the video camera;
analyze the image to determine a distance between the hitch ball and the video camera; and
analyze the image to determine a height of the hitch ball based on the distance between the hitch ball and the video camera.

12. The system according to claim 11, wherein the video camera is a single wide-angle lens camera.

13. The system according to claim 11, wherein the electronic processor is further configured to:
identify an object in the image that is representative of the hitch ball;
identify a location of the object within the image; and
identify an angle associated with the location of the object, the angle being defined as between an optical axis of the video camera and a line of sight to the hitch ball.

14. The system according to claim 13, wherein the electronic processor is further configured to identify the object from at least one feature of the object by comparing the feature with a library of features of one or more hitch balls.

15. The system according to claim 13, wherein the video camera is positioned with a lateral offset from a centerline of the vehicle; and wherein the electronic processor is preprogrammed with a distance value of the lateral offset.

16. The system according to claim 15, wherein the electronic processor is further configured to determine the distance based on a trigonometric relation between the angle and the distance value of the lateral offset.

17. The system according to claim 13, wherein the electronic processor is configured to receive a size value of the hitch ball, and to determine a size of the object in the image.

18. The system according to claim 17, wherein the electronic processor is further configured to compare the size of the object in the image to the size value, and to determine the distance between the hitch ball and the video camera based on a relationship between the distance and the size of the object in the image.

19. The system according to claim 11, wherein the electronic processor is further configured to perform at least one selected from the group consisting of:
end autonomous control of the vehicle when the electronic processor determines that the height of the hitch ball does not have sufficient clearance with a trailer connector; and
issue a warning when the electronic processor determines that the height of the hitch ball does not have sufficient clearance with a trailer connector.

20. The system according to claim 11, wherein the electronic processor is further configured to calibrate the video camera with extrinsic and intrinsic parameters prior to analyzing the image with the electronic processor.
